# EUROPEAN PATENT SPECIFICATION

(11) **EP 2 377 228 B1**
(45) Date of publication and mention of the grant of the patent: **01.07.2015**
(21) Application number: 09835158.8
(22) Date of filing: 09.10.2009
(51) Int. Cl.: H04L 12/12, H04L 12/28

(54) **SYSTEM AND METHODS FOR REDUCING STANDBY POWER AND MONITORING ELECTRIC ENERGY CONSUMED BY HOME APPLIANCES AND HOME NETWORK DEVICES**
SYSTEM UND VERFAHREN ZUR VERRINGERUNG DES LEISTUNGSVERBRAUCHS IM BEREITSCHAFTSMODUS SOWIE ZUR ÜBERWACHUNG DES STROMVERBRAUCHS VON HAUSHALTSGERÄTEN UND HEIMNETZWERKGERÄTEN
SYSTÈME ET PROCÉDÉS VISANT À RÉDUIRE LA PUISSANCE ABSORBÉE AU REPOS ET À SURVEILLER L'ÉNERGIE ÉLECTRIQUE CONSOMMÉE PAR DES APPAREILS MÉNAGERS ET DES DISPOSITIFS DE RÉSEAU DOMESTIQUE

(30) Priority: 24.12.2008 KR 20080133932
(43) Date of publication of application: 19.10.2011
(73) Proprietor: Korea Electronics Technology Institute, Gyeonggi-do 463-816 (KR)
(72) Inventor: CHOI, Kwang Soon, Goyang-si Gyeonggi-do 412-740 (KR); PARK, Young Choong, Seoul 136-816 (KR); AHN, Yang Keun, Seoul 121-835 (KR); JUNG, Kwang Mo, Seoul 121-250 (KR); PARK, Woo Chool, Incheon 402-873 (KR); SEO, Hae Moon, Yongin-si Gyeonggi-do 446-728 (KR); SEO, Kyeung Hak, Seoul 135-838 (KR)
(74) Representative: Vossius & Partner Patentanwälte Rechtsanwälte mbB
(86) International application number: PCT/KR2009/005766
(87) International publication number: WO 2010/074392

(56) References cited:
- EP-A2- 1 361 499
- KR-A- 20040 009 031
- KR-B1- 100 633 779
- KR-B1- 100 677 951
- KR-B1- 100 801 042
- KR-B1- 100 839 018
- US-A1- 2008 231 121
- CHIA-HUNG LIEN ET AL: "Remotely Controllable Outlet System for Home Power Management", 2006 IEEE TENTH INTERNATIONAL SYMPOSIUM, IEEE, 28 June 2006 (2006-06-28), pages 1-6, XP010936842, DOI: 10.1109/ISCE.2006.1689468 ISBN: 978-1-4244-0216-8
- CHIA-HUNG LIEN ET AL: "Power Monitoring and Control for Electric Home Appliances Based on Power Line Communication", INSTRUMENTATION AND MEASUREMENT TECHNOLOGY CONFERENCE PROCEEDINGS, 2008. IMTC 2008. IEEE, IEEE, PISCATAWAY, NJ, USA, 12 May 2008 (2008-05-12), pages 2179-2184, XP031274969, ISBN: 978-1-4244-1540-3
- COSTA-REQUENA J ET AL: "UPnP Low Power Architecture", INTERNET CITATION, 27 August 2007 (2007-08-27), pages 1-44, XP007911300, Retrieved from the Internet: URL:http://www.upnp.org/specs/lp/UPnP-lp-A rchitecture-v1-SDCP-20070828.pdf [retrieved on 2010-01-26]
- WIKIPEDIA: "Advanced Configuration and Power Interface", INTERNET CITATION, 23 August 2006 (2006-08-23), XP002465525, Retrieved from the Internet: URL:http://en.wikipedia.org/w/index.php?ti tle=Advanced_Configuration_and_Power_Inter face&oldid=71295477 [retrieved on 2008-01-21]

## Description

### Technical Field

This invention relates to an energy consumption monitoring and standby power saving system and methods for the home appliances and home network devices that is capable of; automatically shutting off not only passive standby power but also active standby power which is unnecessarily consumed in the residential environment including homes and offices; realtime monitoring of the amount of consumed electrical energy of a specific appliance for a specific period; and providing various power related additional services through transmission of the collected data to power suppliers and service providers.

### Background Art

Together with the advance of digital technology and network technology, home and information appliances are being developed to have various functions in trend with technological fusion and convergence, and such digital fusion devices are spread widely among homes and offices. However, due to the fusion and convergence in functions and support for networking functions, such information home appliances not only consume communication standby power(or active standby power) without user's recognition in contrast to the user's intention, but also consume command queuing standby power(or passive standby power) without user's recognition through various ways such as waiting remote control input which is provided for user's convenience.

Specifically, in case of a home, about 10 to 20% of total power consumption is consumed as standby power (passive and active), and due to the advance in home network the weight of active standby power is increasing and such standby power is expected to increase up to 20 to 40% in the future, and wherein the weight of active standby power is expected to be about 70 to 80%. Hence it is obvious that the active standby power saving shall be a big issue in relation with energy problem in the future.

However, a user can not feel keenly the necessity of electric power saving closely because the user can not acknowledge the amount of power consumed in a certain user's device for a specific period of time, hence, the user only has a suspicious mind about the monthly electric bill occasionally. Recently the demand of technology capable of assisting users to practice energy saving for oneself through solving the curiosity of the users has been increasing.

On the one hand, concerning about the energy consumption monitoring function for each appliance, only the digitalization of the meters, remote metering technology and related equipments for measuring total amount of power consumed by the home and building units has been developed, but the technology that can monitor the power consumption for each appliance for a specific period of time has not been developed yet.

Next, concerning about automatic shut-off function for a standby power, in case of passive standby power, only an outlet providing an unplugging effect by shutting off power at a pre-determined time preset by the user using such as a remote control (when user prefers) has been developed using an outlet or a timer, however, an outlet having an automatic shut-off function has not been developed yet. Furthermore, an outlet which shuts off standby power by distinguishing between in-use power and standby power through load detection has been developed, but even in this case, technologies and products which can automatically shut-off active standby power have not been developed yet.

Next, concerning about interworking service with power suppliers and power service providers, only remote metering technology has been developed, but technologies to feedback the collected power consumption data through system interworking with higher level power suppliers and service providers thereby providing various additional services has not been developed yet.

Following documents represent prior art relevant with regard to what is disclosed herewith: CHIA-HUNG LIEN ET AL: "Remotely Controllable Outlet System for Home Power Management", CHIA-HUNG LIEN ET AL: "Power Monitoring and Control for Electric Home Appliances Based on Power Line Communication", EP 1361499 A2 (CYBER SWITCHING INC [US]) 12 November 2003 and COSTA-REQUENA J ET AL: "UPnP Low Power Architecture" 27 August 2007.

### Disclosure of Invention

### Technical Problem

The object of the present invention, suggested to solve forementioned problems, is to provide an energy consumption monitoring and standby power saving system and methods for the home appliances and home network devices that is capable of; automatically shutting off not only passive standby power but also active standby power which is unnecessarily consumed in the residential environment including homes and offices; realtime monitoring of the amount of consumed electrical energy of a specific appliance for a specific period; and providing various power related additional services through transmission of the collected data to power suppliers and service providers.

### Solution to Problem

The present invention is defined in the independent claims. The dependent claims define particular embodiments of the invention.

According to one feature of the present invention, it provides an energy consumption monitoring and standby power saving system which is connected to home appliances and detects the amount of the power consumption of corresponding home appliances, and includes more than two energy saving nodes which approve application or shut-off power to corresponding home appliances, and an energy saving server which is connected to each of said energy saving nodes and collecting various status information of corresponding home appliances including said amount of power consumption from said nodes.

In the above described configuration, said energy saving nodes and said energy saving server can be connected through a Power Line Communication (PLC), a ZigBee or a Ubiquitous Sensor Network (USN).

On the other hand, said energy saving server can be equipped with a communication interface which communicates with higher systems positioned in a power supplier who provides power to the outside of a home or an office, or positioned in a power related service provider who performs power related services. Said energy saving server can also be realized by integrating with a home gateway or can be equipped with a home gateway interface for interworking with an external home gateway instead.

According to another feature of the present invention, it provides an energy saving server for an energy consumption monitoring and standby power saving system which is connected to home appliances and detects the amount of the power consumption of corresponding home appliances, and connected and realized with more than two energy saving nodes which approve application or shutting off power to corresponding home appliances, and includes a functional module collecting various status information of corresponding home appliances including said amount of power consumption from said energy saving nodes, and a functional module outputting a power supply control signal for corresponding appliance to said energy saving nodes based on said various status data.

Above described configuration can further include; a functional module to transfer collected data by communicating with higher system which is positioned in a power supplier who provides power to the outside of a home or an office, or positioned in a power related service provider who performs power related services; a RS-232 communication interface to provide consumed power monitoring or setting function, interface through IP network using PC and web browser, or a user interface through application program provided by energy saving server itself via home network; an energy consumption monitoring functional module by which a user can verify energy consumption status through said user interface after calculation of consumed amount of the power for a specific time period, or for a specific appliance, or for a specific time period for a specific appliance, or accumulated amount of power used, or estimated electricity cost data based on said various collected status information; a functional module supporting various user setting through said user interface and performing alarm based on said user setting; and a functional module interworking current operation status of information appliances with home gateway functional module or home gateway.

Moreover, a functional module which outputs said power control signal can output said power control signal to said energy saving nodes to shut-off standby power of corresponding home appliance based on said various status information.

Meanwhile, when said standby power is a communication standby power, said functional module which outputs said power control signal can output said power control signal to said energy saving nodes to shut-off said standby power when it receives standby status of appliance from said energy saving nodes to shut-off said standby power; and prepares a stop command for the corresponding appliance to store various context, such as a network setting or an equipment setting necessary when the corresponding appliance wakes up, into a built-in memory, or to push toward a home gateway or an energy saving server; and receives a report from the corresponding appliance that stop ready is completed.

According to another feature of the present invention, either an energy saving node is provided comprising; a detection means for detection of a voltage and a current supplied to a home appliance; a power output means to apply or shut-off AC power to a home appliance; a notification means to output various status information including amount of consumed power of an appliance in audio-visual manner, and after calculation of various information including said amount of consumed power based on the voltage and current values inputted from said detection means, and a centralized control means to control said power output means based on said information; or

an energy saving node is provided comprising; a detection means, disposed between an AC power supply and a home appliance, for detection of a voltage and a current supplied to a home appliance; a power output means to apply or shut-off AC power to a home appliance; a network interface means responsible for communication between higher level network saving server and a centralized control means to control said power output means, and after generating various status information including said amount of consumed power based on the voltage and current values inputted from said detection means and then transfer them to a network saving server through said network interface means.

In the above describe configuration, said power output means can be comprised of or including an always-on-state relay switch which becomes on-state when power is not supplied.

Said detection means can be comprised of MEMS based voltage and current sensors.

Said centralized control means control the operation of said power output means according to its own decision or the command of said energy saving server.

Meanwhile, said network interface means can be comprized of a Power Line Communication (PLC), a ZigBee or a Ubiquitous Sensor Network (USN).

Said energy saving nodes can be comprized of either one of an outlet type comprising an embedded or multi-tap type, or an adaptor type that can be used by plugging into a conventional outlet, or a built-in type that can be installed inside of a home appliance.

### Advantageous Effects of Invention

According to an energy consumption monitoring and standby power saving system and methods for the home appliances and home network devices, following reaction and effect are occurred.

(1) User's practice is the utmost basis in energy saving especially electrical energy saving. However, as the types and numbers of home appliances and information appliances in a home or office are increasing, it is not an easy task to unplug everytime operation of appliances are finished. For this reason passive standby power of appliances which are not operating is consumed, but the present invention provides an automatic unplugging effect.

(2) Due to the networking and convergence of the information appliances, various functions are installed and always connected to the network, therefore far more consumed power and communication standby power are consumed than the general non-networked appliances. For the information appliances which are not operating, communication standby power consumed to maintain network connectability is far greater than the passive standby power, and expected to increase continuously in the future. The present invention can effectively shut-off such communication standby power and devote to energy saving and prevention of global warming.

(3) The energy saving server of the present invention not only can create various additional services by interworking with higher level power suppliers or power service providers, but also have effects on various industries such as power suppliers in establishing power supply plans and home appliance manufacturers in designing home appliances.

(4) Since the energy saving node of the present invention, to be fabricated as an inlet type, requires consideration from the early stage in a building construction, can expedite development in related industries by forming very large market according to the change in regulations and policies.

### Brief Description of Drawings

Fig. 1 is a overall block diagram of a system for reducing standby power and monitoring electric energy consumed by home appliances and home network devices of the invention.
Fig. 2 is a functional structure of an energy saving server shown in Fig. 1 and an overall system block diagram.
Fig. 3 is a block diagram of an energy saving node shown in Fig. 1.

### <Description of Symbols of Main Parts in Drawings>

100: energy saving server 110: energy saving server function unit
120: home gateway function unit 130: home gateway interface
140: home network interface 150: WAN interface
160: wireless network interface 200: energy saving node
210: power input unit 220: AC-DC conversion unit
230: current/voltage detection unit 240: centralized control unit
242: data processing functional unit
244: power consumption measurement functional unit
246: passive standby mode detection functional unit
248: power control functional unit
250: network interface 260: power output unit
300: home appliance 400: higher level system

### Mode for the Invention

Hereinafter, in accordance with preferred embodiments of this invention, a system and methods for reducing standby power and monitoring electric energy consumed by home appliances and home network devices will be described in detail in conjunction with the accompanying drawings.

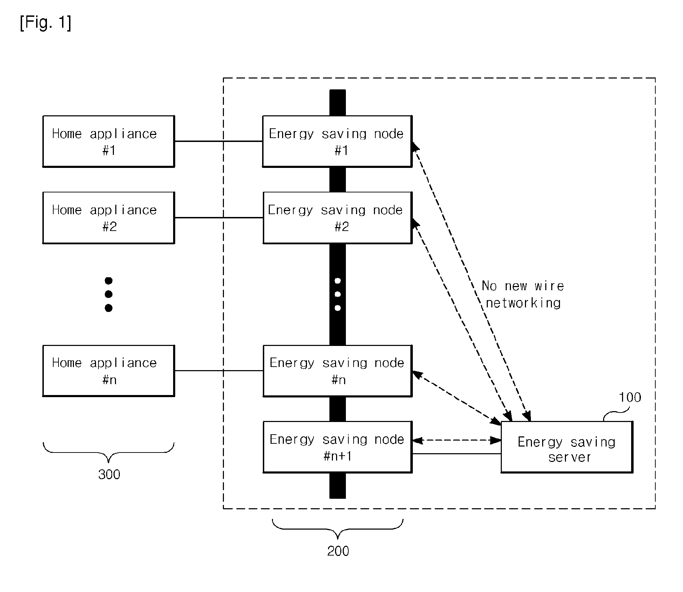

Fig. 1 is a overall block diagram of a system and methods for reducing standby power and monitoring electric energy consumed by home appliances and home network devices of the invention. As shown in Fig. 1, a system and methods for reducing standby power and monitoring electric energy consumed by home appliances and home network devices of the invention can be comprized of multiple energy saving nodes 200 and an energy saving server 100. In here, each energy saving node 200 and energy saving server 100 are connected using networking technology which requires no new wires such as a Power Line Communication (PLC) or a ZigBee or a Ubiquitous Sensor Network (USN), and has a structure enabling mutual transmission and reception of data and command etc. Each energy saving node 200 are connected to each home appliance 300, at this state each energy saving node 200 applies or shuts off AC power to each corresponding home appliance 300.

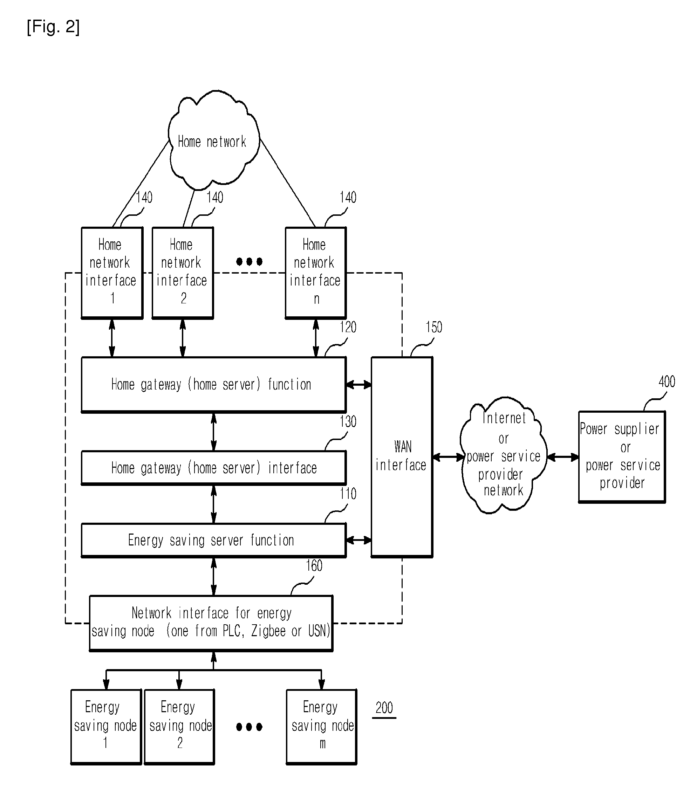

Fig. 2 is a functional structure of an energy saving server shown in Fig. 1 and an overall system block diagram. An energy saving server 100 of the invention may have an interworking function 130 with a home gateway (home server) server 120 or a home gateway (home server) in addition to its unique function 110, hence the energy saving server 100 of the invention is located in the unit where energy management is required such as a home or an office, and interworks with existing home gateway or home server, and the energy server itself can perform a role as a gateway or a home server. In other words, a configuration wherein an energy management function is added to an existing home gateway or home server can be implemented, in this case, the energy saving server can communicate and interwork not only with the energy saving nodes 200 but also with appliances in the home and higher level system 400.

An energy saving server 100, as described above, can have communication function with energy saving nodes 200 through network interface 160 which requires no new wiring, and acquires data such as amount of consumed power collected from the energy saving nodes 200 through communication with the energy saving nodes 200, or acquires status information such as operation time, and performs functions such as starting, completion, and initialization of data and initialization of status information and transmission request by transferring specific commands to the energy saving nodes 200.

An energy saving server 100 has a communication function with higher level system 4000 through a Wide Area Network (WAN) interface 150, wherein a higher level system 400 is a system located inside of a power supplier who supplies power to the outside of a home or an office, or a power service provider who provides power related services. Hence, an energy saving server 100 communicates with a higher level system 400 and can transmit data collected by itself in accordance with the service objective and necessity of a power service provider which is a higher level system 400.

An energy saving server 100 also has a user interface in order to provide consumed power monitoring and setting function etc., for such user interfaces, there are a RS-232 communication interface directly connected to the energy saving server 100, an interface through IP network using PC and web browser, and a user interface through an application program provided by the energy saving server itself via other home network and so on.

An energy saving server 100 further has an energy consumption monitoring function by which a user can verify consumed amount of electric power for a specific time period, for a specific appliance, for a specific time period for a specific appliance, and further provides data such as accumulated amount of power used, or estimated electricity cost data through user interface.

An energy saving server 100 also provides a user setting and alarm function, and a user can set various user setting in the energy saving server 100 through user interface, and an alarm function can be provided in accordance with such settings if necessary. For an example, by providing an alarm function to a user if an instantaneous power consumption of a specific home appliance exceeds a specific value or estimated electric cost exceeds a specific value, an energy saving server 100 can help a user to practice electrical energy saving by himself or herself.

An energy saving server 100 can also provide an active standby power(communication standby power) shut-off function which enables an energy saving server to determine the current operation status of a home appliance 300 when an energy saving server function is added to a home gateway (or home server) or an energy saving server itself provides a home gateway (or home server) function, and it can figure out active standby power (communication standby power) consumption status in connection with a network without a specific operation. In this case, a home appliance is prepared for a stop through communication with corresponding home appliance, and an active standby power (communication standby power) can be shut-off by shutting off the AC power supply by commanding an energy saving node 200 which is connected to a corresponding home appliance 300.

When received a stop ready command, a home appliance 300 can store current context (various settings and status information etc.) in itself or in an energy saving server 100 in preparation for a power re-applying, therefore settings can be completed by re-reading stored setting values when power is re-applied for a user to operate an apparatus etc.

Meanwhile, as described above, an energy saving server 100 can be implemented by; a home gateway (home server) integrated type, in other words, a type wherein an energy saving server function is added to an existing home gateway (home server) or on the contrary a home gateway (home server) function is added to an energy saving server; a home gateway (home server) interworking type, in other words, a single type capable of interworking with a home gateway (home server) providing a pure energy saving server function excluding home gateway (home server) function, or pure single type, in other words, a single type wherein only a pure energy saving server function is provided excluding home gateway (home server) function, hence, not capable of interworking with a home gateway (home server).

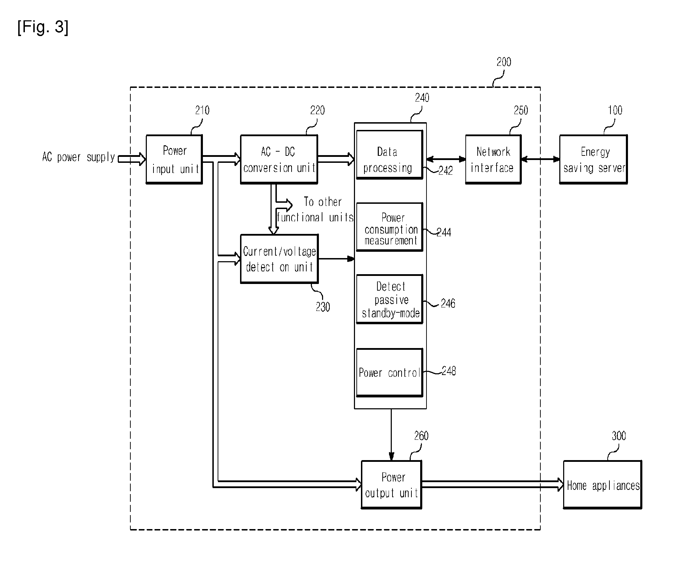

Fig. 3 is a block diagram of an energy saving node shown in Fig. 1. As shown in Fig. 3, an energy saving node 200 of the invention can be comprized of; a power input unit 210 supplying power from AC power input; an AC-DC conversion unit 220 converting an AC power input from the power input unit 210 into a low voltage DC power; a current/voltage detection unit 230 detecting current and voltage consumed in a home appliance 300 connected to energy saving node 200; a centralized control unit 240, as described below, performing various functions by controlling overall operations of the energy saving node 200; a network interface 250 responsible for the communication between the external energy saving server 100; and a power output unit 260 to apply or shut-off an AC power inputted through a power input unit 210 for an external home appliance 300.

In the above described configuration, a power input unit 210 can be comprized of such as a power connector, a power output unit 260 can be comprized of a relay switch and further includes a driver unit to drive the same. In this case, it is preferred that an AC power must be supplied for normal operation of a home appliance 300 even when the energy saving node 200 is operating abnormally or malfunctioned, for this operation, it is desirable to adopt an always-on-state switch as a relay switch which becomes on-state when no power is applied. A current/voltage detection unit 230 can adopt a current and voltage sensor implemented based on non-contact type Micro Electro Mechanical Systems (MEMS) to reduce self power consumption. A centralized control unit 240, which can be implemented by MCU, performs various functions such as routine data processing 242, power consumption measurement 244, passive standby-mode detection 246, or power control 248 through power output unit 260.

If explained in detail, each energy saving node 200 has an AC power supplying function to a home appliance 300 connected to said node.

An energy saving node 200 also has a shut-off function for an AC power which is transferred to a home appliance 300 by a self decision or an external command from an energy saving server 100, and an automatic passive standby power shut-off function which shuts off passive standby power by shutting off power automatically if a home appliance 300 connected to an energy saving node 200 is in a passive standby mode.

An energy saving node 200 also has a passive standby mode decision function for a home appliance whether a home appliance 300 connected to an energy saving node 200 is in a passive standby mode or in main operation mode by the detection value of a current/voltage detection unit 230, a power consumption measurement function which measures consuming power of a home appliance 300 connected to an energy saving node 200.

An energy saving node 200 also has a communication function with an energy saving server 100, through which measured amount of consumed power can be transmitted to an energy saving server 100 by a command from the energy saving server 100.

Meanwhile, such energy saving node 200 can be implemented by; an outlet type comprising an embedded or multi-tap type wherein an energy saving node function is added to a conventional outlet; an adaptor type that can be used by plugging into a conventional outlet wherein an energy saving node function which is pluggable into a conventional outlet is incorporated; or a built-in type that can be installed inside of a home appliance wherein an energy saving node function is incorporated into a modular component form.

System and methods for reducing standby power and monitoring electric energy consumed by home appliances and home network devices of the present invention is not limited to the above described exemplary embodiments, and could be implemented through various modifications within the scope of the appended claims. For example, in an energy saving system configuration comprizing an energy saving node and an energy saving server, only an automatic passive standby power shut-off function can be provided only with an energy saving node without an energy saving server. Further, as described, when an energy saving system is comprized only with an energy saving node, a consumed power monitoring function can be additionally installed inside of the energy saving node so as to have an additional function (means) to inform a user of the monitored power consumption information in audio-visual manner, hence in this case, a consumed power monitoring is possible for only one home appliance.

## Claims

1. A system for reducing standby power and monitoring electric energy consumed by home appliances and home network devices comprising: more than two energy saving nodes (200) which are connected to home appliances (300) and configured to detect amount of power consumption of corresponding home appliances, and approve application or shut-off power to corresponding home appliances; and
an energy saving server (100) which is connected to each of said energy saving nodes (200) and adapted for collecting various status information of corresponding home appliances (300) including said amount of power consumption from said energy saving nodes,
**characterized in that** the energy saving server (100) is configured to output a power control signal to said energy saving nodes (200) to shut-off standby power of corresponding home appliance (300) based on said various status information, and when said standby power is a communication standby power, the energy saving server (100) is adapted to output said power control signal to said energy saving nodes (200) to shut-off said standby power when it receives standby status of appliance from said energy saving nodes (200); to prepare a stop ready command for the corresponding appliance (300) to store various context, such as a network setting or an equipment setting necessary when the corresponding appliance (300) wakes up, into a built-in memory, or to push toward a home gateway or the energy saving server (100); and to receive a report from the corresponding appliance (300) that stop ready is completed.

2. A system for reducing standby power and monitoring electric energy consumed by home appliances and home network devices according to Claim 1, **characterized in that** said energy saving nodes (200) and said energy saving server (100) are connected through a Power Line Communication -PLC- or a Ubiquitous Sensor Network -USN-.

3. A system for reducing standby power and monitoring electric energy consumed by home appliances and home network devices according to Claim 2, wherein said energy saving server (100) is comprised of a communication interface (150) which communicates with a high level system (400) located in a power supplier who supplies power to the outside of a house or an office, or located in a power service provider who carries out power related services.

4. A system for reducing standby power and monitoring electric energy consumed by home appliances and home network devices according to Claim 3, **characterized in that** said energy saving server (100) is integrally implemented with a home gateway.

5. A system for reducing standby power and monitoring electric energy consumed by home appliances and home network devices according to Claim 3, **characterized in that** said energy saving server (100) is comprised of a home gateway interface (130) for interworking with an external home gateway.

6. An energy saving server (100) for a system for reducing standby power and monitoring electric energy consumed by home appliances and home network devices that is connected to more than two energy saving nodes (200) which are connected to home appliances (300) and configured to detect amount of power consumption of corresponding home appliances, and approve application or shut-off power to corresponding home appliances, comprising:
a functional module adapted for collecting various status information including said amount of power consumption of the corresponding home appliance (300); and
a functional module which is adapted for outputing a power control signal for the corresponding home appliance (300) to said energy saving nodes (200) based on said various status information,
**characterized in that** the functional module adapted for outputing the power control signal is configured to output said power control signal to said energy saving nodes (200) to shut-off standby power of corresponding home appliance (300) based on said various status information, and when said standby power is a communication standby power, the functional module adapted for outputing the power control signal is adapted to output said power control signal to said energy saving nodes (200) to shut-off said standby power when it receives standby status of appliance from said energy saving nodes (200); to prepare a stop ready command for the corresponding appliance (300) to store various context, such as a network setting or an equipment setting necessary when the corresponding appliance (300) wakes up, into a built-in memory, or to push toward a home gateway or the energy saving server (100); and to receive a report from the corresponding appliance (300) that stop ready is completed.

7. An energy saving server for a system for reducing standby power and monitoring electric energy consumed by home appliances and home network devices according to Claim 6, **characterized in that** it is further comprised of a functional module which transfers collected data through communication with a higher level system (400) located in a power supplier who supplies power to the outside of a house or an office, or located in a power service provider who carries out power related services.

8. An energy saving server for a system for reducing standby power and monitoring electric energy consumed by home appliances and home network devices according to Claim 7, **characterized in that** it is further comprised of a RS-232 communication interface to provide consumed power monitoring or setting function, an interface through IP network using PC and web browser, or a user interface through application program provided by energy saving server itself via home network.

9. An energy saving server for a system for reducing standby power and monitoring electric energy consumed by home appliances and home network devices according to Claim 8, **characterized in that** it is further comprised of an energy consumption monitoring functional module by which a user can verify energy consumption status through said user interface after calculation of consumed amount of the power for a specific time period, or for a specific appliance, or for a specific time period for a specific appliance, or accumulated amount of power used, or estimated electricity cost data based on collected said various status information.

10. An energy saving server for a system for reducing standby power and monitoring electric energy consumed by home appliances and home network devices according to Claim 9, **characterized in that** it is further comprised of a functional module supporting various user setting through said user interface and performing alarm based on said user setting.

11. An energy saving server for a system for reducing standby power and monitoring electric energy consumed by home appliances and home network devices according to Claim 10, **characterized in that** it is further comprised of a functional module interworking current operation status of home appliances with home gateway functional module or home gateway.

## Patentansprüche

1. System zum Reduzieren des Bereitschaftsstroms und Überwachen der elektrischen Energie, die durch Haushaltsgeräte und Heimnetzwerkvorrichtungen verbraucht wird, das aufweist: mehr als zwei Energiesparknoten (200), die mit Haushaltsgeräten (300) verbunden und konfiguriert sind, den Betrag des Stromverbrauchs entsprechender Haushaltsgeräte zu ermitteln, und den Einsatz zu genehmigen oder den Strom zu den entsprechenden Haushaltsgeräten abzuschalten; und
einen Energiesparserver (100), der mit jedem der Energiesparknoten (200) verbunden ist und zum Sammeln von verschiedenen Statusinformationen der entsprechenden Haushaltsgeräte (300) einschließlich des Betrags des Stromverbrauchs von den Energiesparknoten eingerichtet ist,
**dadurch gekennzeichnet, dass** der Energiesparserver (100) konfiguriert ist, ein Stromsteuersignal an den Energiesparknoten (200) auszugeben, um den Bereitschaftsstrom des entsprechenden Haushaltsgeräts (300) beruhend auf den verschiedenen Statusinformationen abzuschalten, und wenn der Bereitschaftsstrom ein Kommunikationsbereitschaftsstrom ist, der Energiesparserver (100) eingerichtet ist, das Stromsteuersignal an den Energiesparknoten (200) auszugeben, um den Bereitschaftsstrom abzuschalten, wenn er den Bereitschaftsstatus des Geräts vom Energiesparknoten (200) empfängt; um einen Bereitschaftsstoppbefehl für das entsprechende Gerät (300) vorzubereiten, um unterschiedliche Kontexte, wie eine Netzwerkeinstellung oder eine Geräteeinstellung, die benötigt werden, wenn das entsprechende Gerät (300) aufwacht, in einen eingebauten Speicher zu speichern, oder zu einem Heim-Gateway oder dem Energiesparserver (100) zu schieben; und um eine Meldung vom entsprechenden Gerät (300) zu empfangen, dass der Bereitschaftsstopp beendet ist.

2. System zum Reduzieren des Bereitschaftsstroms und Überwachen der elektrischen Energie, die durch Haushaltsgeräte und Heimnetzwerkvorrichtungen verbraucht wird, nach Anspruch 1, **dadurch gekennzeichnet, dass** der Energiesparknoten (200) und der Energiesparserver (100) durch eine Powerline Communication (PLC) oder ein Ubiquitous Sensor Network (USN) verbunden sind.

3. System zum Reduzieren des Bereitschaftsstroms und Überwachen der elektrischen Energie, die durch Haushaltsgeräte und Heimnetzwerkvorrichtungen verbraucht wird, nach Anspruch 2, wobei der Energiesparserver (100) eine Kommunikationsschnittstelle (150) aufweist, die mit einem höheren System (400) kommuniziert, das sich bei einem Stromversorger befindet, der den Strom zum Äußeren eines Hauses oder eines Büros liefert, oder sich bei einem Stromdienstanbieter befindet, der den Strom betreffende Dienste ausführt.

4. System zum Reduzieren des Bereitschaftsstroms und Überwachen der elektrischen Energie, die durch Haushaltsgeräte und Heimnetzwerkvorrichtungen verbraucht wird, nach Anspruch 3, **dadurch gekennzeichnet, dass** der Energiesparserver (100) integral mit einem Heim-Gateway ausgeführt ist.

5. System zum Reduzieren des Bereitschaftsstroms und Überwachen der elektrischen Energie, die durch Haushaltsgeräte und Heimnetzwerkvorrichtungen verbraucht wird, nach Anspruch 3, **dadurch gekennzeichnet, dass** der Energiesparserver (100) eine Heim-Gateway-Schnittstelle (130) zur Zusammenarbeit mit einem externen Heim-Gateway aufweist.

6. Energiesparserver (100) für ein System zum Reduzieren des Bereitschaftsstroms und Überwachen der elektrischen Energie, die durch Haushaltsgeräte und Heimnetzwerkvorrichtungen verbraucht wird, das mit mehr als zwei Energiesparknoten (200) verbunden ist, die mit Haushaltsgeräten (300) verbunden und konfiguriert sind, den Betrag des Stromverbrauchs entsprechender Haushaltsgeräte zu ermitteln, und den Einsatz zu genehmigen oder den Strom zu den entsprechenden Haushaltsgeräten abzuschalten, der aufweist:
ein Funktionsmodul, das zum Sammeln von verschiedenen Statusinformationen eingerichtet ist, die den Betrag des Stromverbrauchs des entsprechenden Haushaltsgeräts (300) umfassen; und
ein Funktionsmodul, das zum Ausgeben eines Stromsteuersignals für das entsprechende Haushaltsgerät (300) an den Energiesparknoten (200) beruhend auf den verschiedenen Statusinformationen eingerichtet ist,
**dadurch gekennzeichnet, dass** das Funktionsmodul, das zum Ausgeben des Stromsteuersignals eingerichtet ist, konfiguriert ist, das Stromsteuersignal an den Energiesparknoten (200) auszugeben, um den Bereitschaftsstrom des entsprechenden Haushaltsgeräts (300) beruhend auf den verschiedenen Statusinformationen abzuschalten,
und wenn der Bereitschaftsstrom ein Kommunikationsbereitschaftsstrom ist, das Funktionsmodul, das zum Ausgeben des Stromsteuersignals eingerichtet ist, eingerichtet ist, das Stromsteuersignal an den Energiesparknoten (200) auszugeben, um den Bereitschaftsstrom abzuschalten, wenn es den Bereitschaftsstatus des Geräts vom Energiesparknoten (200) empfängt;
um einen Bereitschaftsstoppbefehl für das entsprechende Gerät (300) vorzubereiten, um unterschiedliche Kontexte, wie eine Netzwerkeinstellung oder eine Geräteeinstellung, die benötigt werden, wenn das entsprechende Gerät (300) aufwacht, in einen eingebauten Speicher zu speichern, oder zu einem Heim-Gateway oder dem Energiesparserver (100) zu schieben; und um eine Meldung vom entsprechenden Gerät (300) zu empfangen, dass der Bereitschaftsstopp abgeschlossen ist.

7. Energiesparserver für ein System zum Reduzieren des Bereitschaftsstroms und Überwachen der elektrischen Energie, die durch Haushaltsgeräte und Heimnetzwerkvorrichtungen verbraucht wird, nach Anspruch 6, **dadurch gekennzeichnet, dass** er ferner aus einem Funktionsmodul besteht, das gesammelte Daten durch eine Kommunikation mit einem höheren System (400) befördert, das sich bei einem Stromversorger befindet, der den Strom zum Äußeren eines Hauses oder eines Büros liefert, oder sich bei einem Stromdienstanbieter befindet, der den Strom betreffende Dienste ausführt.

8. Energiesparserver für ein System zum Reduzieren des Bereitschaftsstroms und Überwachen der elektrischen Energie, die durch Haushaltsgeräte und Heimnetzwerkvorrichtungen verbraucht wird, nach Anspruch 7, **dadurch gekennzeichnet, dass** er ferner aus einer RS-232-Kommunikationsschnittstelle, um eine Überwachungs- oder Einstellungsfunktion des verbrauchten Stroms bereitzustellen, einer Schnittstelle durch ein IP-Netzwerk mittels eines PC und Webbrowsers, oder einer Benutzerschnittstelle durch ein Anwendungsprogramm besteht. das durch den Energiesparserver selbst über ein Heimnetzwerk bereitgestellt wird.

9. Energiesparserver für ein System zum Reduzieren des Bereitschaftsstroms und Überwachen der elektrischen Energie, die durch Haushaltsgeräte und Heimnetzwerkvorrichtungen verbraucht wird, nach Anspruch 8, **dadurch gekennzeichnet, dass** es ferner aus einem Energieverbrauchsüberwachungs-Funktionsmodul besteht, durch das ein Benutzer den Energieverbrauchsstatus durch die Benutzerschnittstelle nach einer Berechnung der verbrauchten Menge des Stroms während einer spezifischen Zeitspanne, oder für ein spezifisches Gerät, oder während einer spezifischen Zeitspanne für ein spezifisches Gerät, oder die aufgelaufene verwendete Strommenge, oder die geschätzten Elektrizitätskostendaten beruhend auf den gesammelten verschiedenen Statusinformationen überprüfen kann.

10. Energiesparserver für ein System zum Reduzieren des Bereitschaftsstroms und Überwachen der elektrischen Energie, die durch Haushaltsgeräte und Heimnetzwerkvorrichtungen verbraucht wird, nach Anspruch 9, **dadurch gekennzeichnet, dass** er ferner aus einem Funktionsmodul besteht, das verschiedene Benutzereinstellungen durch die Benutzerschnittstelle unterstützt und beruhend auf der Benutzereinstellung einen Alarm durchführt.

11. Energiesparserver für ein System zum Reduzieren des Bereitschaftsstroms und Überwachen der elektrischen Energie, die durch Haushaltsgeräte und Heimnetzwerkvorrichtungen verbraucht wird, nach Anspruch 10, **dadurch gekennzeichnet, dass** er ferner aus einem Funktionsmodul besteht, das den gegenwärtigen Betriebsstatus von Haushaltsgeräten mit einem Heim-Gateway-Funktionsmodul oder einem Heim-Gateway verknüpft.

## Revendications

1. Système destiné à réduire la puissance absorbée au repos et à surveiller le courant électrique consommé par des appareils ménagers et des dispositifs de réseau domestique, comprenant : plus de deux noeuds d'économie d'énergie (200) reliés à des appareils ménagers (300) et configurés pour détecter la consommation d'électricité des appareils ménagers correspondants, et pour autoriser l'application de courant ou couper celui-ci vers les appareils ménagers correspondants ; et
un serveur d'économie d'énergie (100) relié à chacun des noeuds d'économie d'énergie (200) et prévu pour recueillir diverses informations d'état des appareils ménagers (300) correspondants, incluant la consommation d'électricité des noeuds d'économie d'énergie,
**caractérisé en ce que** le serveur d'économie d'énergie (100) est configuré pour émettre un signal de commande de courant vers les noeuds d'économie d'énergie (200) pour couper la puissance absorbée au repos par l'appareil domestique (300) correspondant sur la base des diverses informations d'état, et si la puissance absorbée au repos est une puissance de communication absorbée au repos, le serveur d'économie d'énergie (100) est prévu pour émettre le signal de commande de courant vers les noeuds d'économie d'énergie (200) pour couper la puissance absorbée au repos quand il reçoit l'état de repos de l'appareil depuis les noeuds d'économie d'énergie (200) ;
pour préparer une commande prêt à l'arrêt pour l'appareil (300) correspondant afin de sauvegarder dans une mémoire interne des contextes variés, tels qu'un paramétrage de réseau network ou un réglage d'équipement exigé quand l'appareil (300) correspondant sort de l'état de veille, ou pour activer, une passerelle domestique ou le serveur d'économie d'énergie (100) ; et pour recevoir un rapport de l'appareil (300) correspondant, selon lequel la commande prêt à l'arrêt est exécutée.

2. Système destiné à réduire la puissance absorbée au repos et à surveiller le courant électrique consommé par des appareils ménagers et des dispositifs de réseau domestique selon la revendication 1, **caractérisé en ce que** les noeuds d'économie d'énergie (200) et le serveur d'économie d'énergie (100) sont reliés par une liaison à courants porteurs en ligne (PLC) ou un réseau de capteurs ubiquitaires (USN).

3. Système destiné à réduire la puissance absorbée au repos et à surveiller le courant électrique consommé par des appareils ménagers et des dispositifs de réseau domestique selon la revendication 2, où le serveur d'économie d'énergie (100) comprend une interface de communication (150) communiquant avec un système de niveau supérieur (400) prévu chez un fournisseur d'énergie alimentant en courant l'extérieur d'une maison ou d'un bureau, ou chez un fournisseur de services électriques, prestataire de services associés à l'électricité.

4. Système destiné à réduire la puissance absorbée au repos et à surveiller le courant électrique consommé par des appareils ménagers et des dispositifs de réseau domestique selon la revendication 3, **caractérisé en ce que** le serveur d'économie d'énergie (100) est intégré à une passerelle domestique.

5. Système destiné à réduire la puissance absorbée au repos et à surveiller le courant électrique consommé par des appareils ménagers et des dispositifs de réseau domestique selon la revendication 3, **caractérisé en ce que** le serveur d'économie d'énergie (100) comprend une interface de passerelle domestique (130) pour interagir avec une passerelle domestique externe.

6. Serveur d'économie d'énergie (100) pour un système destiné à réduire la puissance absorbée au repos et à surveiller le courant électrique consommé par des appareils ménagers et des dispositifs de réseau domestique, relié à plus de deux noeuds d'économie d'énergie (200) reliés à deux appareils ménagers (300) et configuré pour détecter la consommation d'électricité d'appareils ménagers correspondants, et pour autoriser l'application de courant ou couper celui-ci vers les appareils ménagers correspondants, comprenant :
un module fonctionnel prévu pour recueillir diverses informations, incluant la consommation d'électricité de l'appareil domestique (300) correspondant ; et
un module fonctionnel prévu pour émettre un signal de commande de courant pour l'appareil domestique (300) correspondant vers les noeuds d'économie d'énergie (200) sur la base des diverses informations d'état,
**caractérisé en ce que** le module fonctionnel prévu pour émettre le signal de commande de courant est configuré pour émettre le signal de commande de courant vers les noeuds d'économie d'énergie (200) afin de couper la puissance absorbée au repos de l'appareil domestique (300) correspondant sur la base des diverses informations d'état,
et si la puissance absorbée au repos est une puissance de communication absorbée au repos, le module fonctionnel prévu pour émettre le signal de commande de courant est configuré pour émettre ledit signal de commande de courant vers les noeuds d'économie d'énergie (200) pour couper la puissance absorbée au quand il reçoit l'état de repos de l'appareil depuis les noeuds d'économie d'énergie (200) ;
pour préparer une commande prêt à l'arrêt pour l'appareil (300) correspondant afin de sauvegarder dans une mémoire interne des contextes variés, tels qu'un paramétrage de réseau network ou un réglage d'équipement exigé quand l'appareil (300) correspondant sort de l'état de veille, ou pour activer une passerelle domestique ou le serveur d'économie d'énergie (100) ; et pour recevoir un rapport de l'appareil (300) correspondant, selon lequel la commande prêt à l'arrêt est exécutée.

7. Serveur d'économie d'énergie pour un système destiné à réduire la puissance absorbée au repos et à surveiller le courant électrique consommé par des appareils ménagers et des dispositifs de réseau domestique selon la revendication 6, **caractérisé en ce que** celui-ci est en outre constitué d'un module fonctionnel qui transfère les données recueillies par communication avec un système de niveau supérieur (400) prévu chez un fournisseur d'énergie alimentant en courant l'extérieur d'une maison ou d'un bureau, ou chez un fournisseur de services électriques, prestataire de services associés à l'électricité.

8. Serveur d'économie d'énergie pour un système destiné à réduire la puissance absorbée au repos et à surveiller le courant électrique consommé par des appareils ménagers et des dispositifs de réseau domestique selon la revendication 7, **caractérisé en ce que** celui-ci est en outre constitué d'une interface de communication RS-232 pour communiquer la surveillance de courant consommé ou la fonction de réglage, d'une interface de réseau IP recourant à un PC et un navigateur Web, ou d'une interface d'utilisateur via un programme d'application fourni par le serveur d'économie d'énergie lui-même par l'intermédiaire d'un réseau domestique.

9. Serveur d'économie d'énergie pour un système destiné à réduire la puissance absorbée au repos et à surveiller le courant électrique consommé par des appareils ménagers et des dispositifs de réseau domestique selon la revendication 8, **caractérisé en ce que** celui-ci est en outre constitué d'un module fonctionnel de surveillance de consommation de courant au moyen duquel un utilisateur peut contrôler l'état de consommation de courant par l'interface d'utilisateur après calcul de la quantité de courant consommée pendant une période spécifique, ou pour appareil spécifique, ou pour une période spécifique pour un appareil spécifique, ou une quantité accumulée de courant consommé, ou des données estimées de dépenses d'électricité sur la base des diverses informations d'état recueillies.

10. Serveur d'économie d'énergie pour un système destiné à réduire la puissance absorbée au repos et à surveiller le courant électrique consommé par des appareils ménagers et des dispositifs de réseau domestique selon la revendication 9, **caractérisé en ce que** celui-ci est en outre constitué d'un module fonctionnel assistant divers réglages d'utilisateur via l'interface d'utilisateur et déclenchant une alerte sur la base desdits réglages d'utilisateur.

11. Serveur d'économie d'énergie pour un système destiné à réduire la puissance absorbée au repos et à surveiller le courant électrique consommé par des appareils ménagers et des dispositifs de réseau domestique selon la revendication 10, **caractérisé en ce que** celui-ci est en outre constitué d'un module fonctionnel faisant interagir l'état de fonctionnement actuel d'appareils ménagers avec un module fonctionnel de passerelle domestique ou une passerelle domestique.
